# EUROPEAN PATENT SPECIFICATION

(11) **EP 0 750 594 B1**
(45) Date of publication and mention of the grant of the patent: **19.05.1999**
(21) Application number: 95912891.9
(22) Date of filing: 07.03.1995
(51) Int. Cl.: C03C 25/02, C08J 5/08

(54) **GLASS FIBER SIZING AND SIZED GLASS FIBERS AND POLYOLEFIN REINFORCING ARTICLES**
GLASFASERSCHLICHTE UND GESCHLICHTETE GLASFASERN UND POLYOLEFIN VERSTÄRKENDE GEGENSTÄNDE
ENCOLLAGE DE FIBRES DE VERRE, FIBRES DE VERRE ENCOLLEES ET ARTICLES DE RENFORCEMENT DE POLYOLEFINES

(30) Priority: 14.03.1994 US 212539
(43) Date of publication of application: 02.01.1997
(73) Proprietor: PPG INDUSTRIES, INC., Pittsburgh Pennsylvania 15272 (US)
(72) Inventor: SCHELL, Philip, L., NL-9403 JA Assen (NL); MEESTERS, Laura, A., NL-9956 PD Den Andel (NL)
(74) Representative: Fleischer, Holm Herbert, Dr.
(86) International application number: PCT/US95/03090
(87) International publication number: WO 95/25074

(56) References cited:
- EP-A- 0 356 655
- EP-A- 0 381 125
- DE-A- 4 129 448
- US-A- 4 728 573
- US-A- 5 199 098
- DATABASE WPI Section Ch, Week 8104 Derwent Publications Ltd., London, GB; Class A, AN 81-04839d & JP,A,55 149 147 (FUJI FIBER GLASS KK) , 21 November 1980

## Description

### BACKGROUND OF THE INVENTION

The present invention is directed to chemically treated glass fibers, strands or yarn where the fibers impart improved strength in reinforcing thermoplastics and in particular polyolefins.

Glass fibers are produced by flowing molten glass via gravity through a multitude of small openings in a precious metal device, called a bushing. Typical formulations of glass fibers are disclosed in The Manufacturing Technology of Continuous Glass Fibres, Library of Congress Catalog Card Number 72-97429, by K. L. Loewenstein, Elsevier Scientific Publishing, 1973, at page 29. Glass fibers are, for example, those known as "E glass", "S glass", "D glass" and are typically between 3 and 30 microns in diameter.

After the fibers have cooled very shortly after their issuance from the bushing and usually in close proximity to the bushing, these fibers are treated with a chemical treating formulation usually referred to in the art as a sizing composition or size. The size serves to make the fibers more compatible with the material they will ultimately be used to reinforce and to make the fibers more easy to process. The aqueous size can be applied by sprayers, rollers, belts, metering devices or any similar application device. The sized glass fibers are gathered into bundles or strands comprising a plurality of individual fibers, generally from 200 to more than 3000. The sized glass fibers generally can have between about 0.01 and 5 percent of sizing composition based on the weight of the glass fiber.

After their formation and treatment, the strands may be wound into a spool or "forming package" and/or may be chopped. The forming packages or chopped strands are usually dried in either an oven or at room temperature to remove some of the moisture from the fibers.

The strands of treated fibers may be used to reinforce various materials such as thermoplastic polymers. Thermoplastics may be of different types including chemically coupled and non-chemically coupled thermoplastics. Particular types of strands of sized fibers have generally been directed to either chemically coupled or non-chemically coupled thermoplastics, such as polyalkylenes including polypropylenes.

U.S. Patent 5,130,197 by Temple teaches a sizing having 1) an amino-silane coupling agent, 2) a carboxylic modified polyolefin resin, 3) an epoxy, urethane, or polyester resin or copolymer thereof, and 4) a binder stabilizer. These sized fibers are preferably used to reinforce non-chemically coupled polypropylene homopolymer. Also U.S. Patent 4,341,677 by Tamosauskas teaches a size having a film forming polymer, coupling agent and an oil-in-water emulsion of an antioxidant like hindered phenols and diarylamines.

EP-A 381 125 discloses a composition for use for example to size glass fibers comprising an organofunctional silane coupling agent, a filmforming material, e.g. polyolefin latexes or polypropylene and a metal deactivator, a low temperature antioxidant like hypophosphites and specific higher temperature antioxidants.

From US-A 4,728,573 an aqueous sizing composition for glass fibers comprising an acid modified polyolefin is known.

The fiber reinforced plastic industry continues to search for improvements in mechanical properties both initially and upon heat ageing.

It is an object of the present invention to provide chemically treated or sized fibers and strands and bundles thereof resulting in improved initial mechanical strength and/or improved mechanical strength retention and/or color on heat ageing when used to reinforce either chemically coupled and/or non-chemically coupled thermoplastic polymers like polyalkylenes.

### SUMMARY OF THE INVENTION

The objects of this invention are achieved by glass fibers which have been treated with a sizing having an organo functional inorganic coupling agent, an acid modified polyolefin film forming polymer, one or more stabilizers that are effective against oxidizing phenomena, and a carrier for application of the size to the glass fibers. The stablizers are 1) hypophosphites, and 2) mixtures or combinations of the stabilizers of 1) with other types of stablizers, such as hindered phenols, diarylamines, thioethers and the like. Optionally the size can have a partial ester of a branched carboxylic acid copolymer as well as one or more other components like film forming polymers, coupling agents, fiber lubricants and the like. Another aspect of the invention is the polyolefin reinforcement comprised of a plurality of sized glass fibers having the aforementioned size.

### DETAILED DESCRIPTION OF THE INVENTION

Any glass fiber suitable for reinforcing may suitably be treated in accordance with the present invention. Glass fibers such as soda lime glasses and borosilicate glasses like "E" glass and "621" type glass are particularly suited for this practice. Also "E" and "621" type glasses formulated with lower amounts of or free of boron and flourine can be used. Examples of some suitable glass fibers are described at page 29 of The Manufacturing Technology of Continuous Glass Fibers by K. L. Lowenstein, published in 1973 by Elsevier Scientific Publishing Company, Library of Congress Card Number 72-97429.

The glass fibers to be treated according to this invention may typically be produced according to the teachings of U.S. Pat. No. 2,133,238. The glass fibers are formed by being drawn at a high rate of speed from molten cones of glass located at the tips of small orifices in one or more bushings of a glass melting device or furnace. Immediately after formation, the filaments are treated with with a chemical sizing prepared in the below-described manner.

The application of the sizing to the filaments can occur while they are moving at a speed on the order of 1000 to 20,000 feet per minute (300 to 6100 meters/min) in the immediate vicinity of the hot bushings and the glass furnace in which the glass is melted. The application of sizing to glass fibers is well known in the art and may be accomplished by conventional methods such as a belt applicator, a "kiss-roll" applicator or by spraying. Details of a sizing applicator are shown in U.S. Patent No. 2,728,972. The amount of sizing deposited on the glass is around 0.01 to around 5 weight percent and preferably around 0.3 to around 2.5 to 3 weight percent of the treated glass fiber strand.

After sizing, the glass fibers are gathered into bundles or strands of a plurality of fibers usually by a gathering shoe and/or a strand pulling device as illustrated in U.S. Pat. Nos. 3,292,013 and 4,248,935. Additionally, or alternatively the fibers before or after collection into one or more strands may be attenuated by a chopper which cuts the fibers and/or collected strands into lengths from about a sixteenth (1.6 mm) to about 3 (76.2 mm) inches. The chopped strands can be deposited into a bag or box for ease in handling. The amount of moisture on the wet chopped glass fiber is generally in the range of up to about 20 weight percent. The glass may also be gathered into strands and collected as continuous glass fiber strand into a forming package and subsequently chopped in a remote wet chop process or after drying, in a dry chop process into lengths similar to those of the direct wet chop process. The forming package may be dried to remove residual moisture at room temperature or by oven heating.

The sizing of this invention has, in addition to water, around 1 to around 50 weight percent solids which is on the basis of weight percent of nonvolatiles or of the dried film. Stated another way this is an amount of water of around 50 to around 99 weight percent of the size. Based on the weight percent of the non-volatiles the amounts of the nonaqueous components in the size are as follows: around 1 to around 30 weight percent of one or more organo-functional coupling agent from around 50 to around 90 weight percent of the polyolefin compatible film forming polymer, and from around 1 to 25 weight percent of one or more stabilizers for the oxidizing phenomena. Optionally, but preferably, a partial ester of a branched carboxylic acid copolymer is present in an amount from around 1 to around 10 weight percent of the non-volatile components. Other components optionally added are present in minor amounts to that of the polyolefin compatible film forming polymer.

The organo functional inorganic coupling agent useful in this invention can be an organo-functional silane compound used as a coupling agent between the predominantly organic size and the inorganic glass and any silane coupling agent known in the art may be used. Examples of organo-functional silane coupling agents useful in this invention are amino-functional silanes and epoxy-functional silanes. Commercially available silanes such as gamma-aminopropyltriethoxy silane and gamma-glycidoxypropyltrimethoxy silane are useful. These silanes are available from OSi specialties Company of Tarrytown New York as A-1100 and A-187, respectively, and from Dow Corning Corporation as Z-6011 and Z-6040, respectively. The amino functional silane is preferred and the silane may be hydrolyzed to some degree before use by reacting it with an effective amount of a suitable acid like a carboxylic acid such as acetic acid. Other coupling agents that can be used are the transition metal coupling agents such as the titanium and zirconium organofunctional coupling agents like the monoalkoxy, monoalkoxypyrophosphato, chelate, and coordinate types and the Werner coupling agents and the like. All of these provide the interfacial boundary area coupling between the glass inorganic surface and the organic matrix polymer.

The polyolefin compatible film forming polymer is preferably an aqueous emulsion of a chemically-modified polyolefin. The acid modified polyolefins may be either amorphous or crystalline in type such as those produced by the method explained in U.S. Patents 3,416,990 (Robinson); 3,437,550 (Paul) and 3,483,276 (Mahlman). A discussion of these polyolefins, their modification and emulsification may be found in U.S. Patent 5,130,197. An example of a crystalline carboxylated polypropylene polymer that can be used in the emulsion to produce glass fibers of the present invention is the Hercoprime® G type resin available from Hercules, Inc., Bloomington, Delaware. An example of the carboxylated amorphous polypropylene polymer that can be used in the sizing composition for preparing glass fibers of the present invention is commercially available as Epolene® E-43 available from the Tennessee Eastman Co. Another suitable example is an emulsion of the Epolene E-43 available from Byk-Cera under the trade designation of Aquacer 841 emulsion. This latter emulsion is the preferred polyolefin compatible film forming polymer which is present in sufficient quanitites to provide a predominant amount of the solids or non-volatiles of the aqueous size.

An aqueous polyolefin emulsion can be prepared from either the carboxylated amorphous polyolefin such as the carboxylated amorphous polypropylene polymer or the crystalline carboxylated polyolefin such as the crystalline carboxylated polypropylene, Hercoprime® G resin, or mixtures. Any surfactants or combination of surfactants known to those skilled in the art in emulsifying polyolefins can be used.

A commercially available version of the aqueous polyolefin emulsion is the carboxylated amorphous polypropylene that is from National Starch, Procter Division, under the trade designation Protolube RL-5440 polypropylene emulsion. This product has a pH of about 9.5±0.5, a solids content of 32±1, a color ranging from tan to a grey emulsion and is slightly cationic and has a boiling point of approximately 100°C, a specific gravity of 0.98. An infrared spectraphotometric curve and differential scanning colorimeter curve of the RL-5440 emulsion product are presented as Figs. 3 and 4 of U.S. Patent 5,130,197 and the procedure for obtaining the curves is given therein.

Another component of the chemical treating composition, which preferably is present, is one or more stabilizers against the oxidizing phenomenon. It has been discovered that particular types of stabilizers that may act as antioxidants provide particular benefits to the thermoplastic polymer such as polyolefins, polyamides, and polyesters (PBT and PET) that are reinforced with glass fibers or filled with siliceous material like glass flake and the like. These water emulsifiable, dispersible, or soluble stabilizers include hypophosphites. These can be used alone or in mixtures with each other or in mixtures with any other emulsifiable, dispersible, or soluble antioxidant that is known to those skilled in the art for use with coatings and films on discrete surfaces such as fibers. For instance, the antioxidants of U.S. Patents 4,483,948; and 4,341,677 may be used and these patents are hereby incorporated by reference. A few examples of these other types of antioxidants include hindered phenols, diarylamines, thioethers, and the like.

Examples of the hypophosphites include the water soluble alkali metal and alkaline earth metal and ammonium hypophosphites.

The preferred stabilizers are the water soluble inorganic hypophosphites and most preferably the sodium hypophosphite is the sole stabilizer present in a preferred amount of from around 3 up to around 10 weight percent of the aqueous chemical treating composition. A suitable sodium hypophosphite is that available from Fisher Scientific Company as solid sodium hypophosphite having the formula NaH₂PO₂.H₂O. This material is water soluble and when the carrier for the chemical treating composition is water, it is merely dissolved into the chemical treating composition or predissolved and added to the chemical treating composition. For the amount of the phosphite or phosphonate stabilizer, greater amounts can be used to provide even greater benefits in mechanical properties. The amount of the stabilizer that should not be exceeded is where the amounts of the other components are limited to the extent to deleteriously affect the overall performance of the size. The effective stabilizing amount of the stabilizer is that which improves the mechanical properties of the glass fiber reinforced and/or siliceous filled thermoplastic polymeric matrix.

Also, mixtures of these stabilizers are useful in the chemical treating composition and preferably a mixture is used. The mixture of stabilizers can be incorporated into the chemical treating composition or added in a secondary treatment after the chemical treatment has first been applied to the fibers of reinforcement. Examples of other antioxidants that can be used in stabilizer combinations with one or more of the hypophosphites are the thioethers and polymers thereof. A nonexclusive example of these is di(tridecyl)thiodipropionate with a chemical formula of S(CH₂CH₂COOC₁₃H₂₇)₂. A suitable thiodipropionate is that available from Grace from their Evans Chemetics Unit in Waterloo, New York, under the product name Evanstab 13. Another example is distearyldithiodipropionate (DSTDP) available from Eastman Chemical Company, Tennessee under the trade designation PA 49M. The amount of the mixture is generally in the aforestated range of amounts for the stabilizer.

Optionally, but preferably the size also has carboxylic copolymer partial ester which may be used in this invention as an emulsifier and/or lubricant. It and its derivatives are polymers with pendant hydrocarbon and ethoxylated ester chains. A commercially available version of a suitable carboxylic copolymer partial ester is that from Akzo Chemie America, of Chicago, under the trade designation Dapral® GE 202 partial ester. This material has an average molecular weight of about 20,000, a specific gravity of 1.05 at 25°C, a flash point of 178°C COC (Cleveland Open Cup) and is a yellowish, viscous liquid with little odor. This material is a partial ester of a branched carboxylic acid copolymer. This polymer has a comb-like structure and the main chain consists of carbon atoms only. The alkyl branches are hydrophobic and the ester and ether groups are hydrophilic.

The sizing may optionally have other ingredients which are known to those skilled in the art to be useful in fiber glass sizing such as emulsifiers, antifoams, surfactants and the like. The sizing may be prepared by any method known to those skilled in the art, and applied to the fibers and/or fillers by any method known in the art. For instance when the glass fibers are produced by a dry chop method it is preferable to have an additional film forming polymer in the size to improve the strand integrity.

The carrier for the chemical treating composition is any material known to those skilled in the art for applying the chemical treatment to fibers during their formation or after their formation or to other types of reinforcement during their formation. The carrier can be an organic solvent or water or a combination to produce foams and gels of the chemical treatment. Preferably water is the carrier to give an aqueous chemical treating composition. The carrier like water is present in effective amounts to give total solids (non-volatile content) in the range sufficient for a viscosity of the chemical treatments for application to the fibers for reinforcement or to the fillers. Generally, the water is present in an amount sufficient to give a total solids in the range of about 1 to about 50 weight percent and preferably about 5 to 20 weight percent. In any event the amount of the various components and the amount of water should be balanced so that the viscosity of the solution is not greater than around 150 centipoise at 20°C. Solutions having viscosities greater than 150 centipoise are difficult to apply as aqueous emulsion, dispersions or solutions to fibers during their formation, especially to glass fibers that are formed from molten streams of glass with standard type application equipment without causing the breakage of the continuity of the fibers. It is preferred that the viscosity of the aqueous chemical treating composition for application to glass fibers during their formation is in the range of about 20 to 60 centipoise at 20°C for best results. If the aqueous chemical treating composition is prepared with thixotropic agents to make it a foam or gel, then the viscosity will be that appropriate to such formulations and the application equipment will be appropriate for applying foams and gels to the fibers or reinforcement.

The aqueous chemical treating composition can be prepared by addition of any of the components simultaneously or sequentially to each other, but the components can also be prediluted before they are combined and diluted with water into the aqueous size. This is to enhance their solubility, dispersibility or emulsifiability.

Not only do the reinforcing fibers benefit from treatment with the aforementioned chemical treating composition, but also inorganic fillers sometimes used in reinforced composites would benefit from such treatment. Nonexclusive examples of such inorganic fillers include mica, wollastonite, talc, clay, flaked glass and novaculite. Contacting the fillers with the aqueous size is accomplished by spraying or dipping or the like as a convenient way of treating them.

The dried fibers are used to reinforce polymeric matrices in any of the molding processes known to those skilled in the art utilizing either chopped strand, continuous strand or a mixture thereof. Preferably, the chopped fiber strands are mixed with the matrix polymer resin in a dry powder mixture to produce a homogeneous batch of matrix polymer. The batch can be compression or injection molded to produce the fiber reinforced polymeric part or shaped device. These sized glass fibers are used in molding the fiber reinforced polymers such as fiber reinforced polypropylenes, mixtures of polypropylenes and polyethylenes and polyalkylene terephthalates, including poly(ethylene terephthalate) and poly(butylene terephthalate), polyamides, polyphenylene oxide, polystyrenics and other similar polar thermoplastic polymers, copolymers, blends and alloys.

### Preferred Embodiment

The preferred embodiment utilizes glass fibers that are processed by an after dried wet chop method having a dried residue of the size where the fibers have a length of around 1/8" to 1/2". The fibers have conventional filament diameters that can range from around 1 micron to greater than 30 microns but are preferably in the diameter of around 10 to around 16 microns. The aqueous size preferably has the formulation with ranges of preferred amounts for the components as shown in Table A.:

**TABLE A**

| COMPONENT WEIGHT | PERCENT OF THE SOLIDS |
|---|---|
| Gamma Aminopropyltriethoxysilane | 7.5-to-23.5 |
| Polypropylene emulsion | 64-to-84 |
| sodium hypophosphite | 3.0-to-15 |
| carboxylic copolymer partial ester | 0.3-to-2.3 |

The fibers of this invention may be used to reinforce thermoplastics which are chemically coupled. The term "chemically coupled" means a thermoplastic such as polypropylene to which has been added an acid modified polyolefin which provides chemical moieties for reaction with the components of the sizing. This acid modified polyolefin chemical coupler is added to the thermoplastic as a physical mixture prior to compounding with the fibers and may be, for example, polypropylene with pendant carboxylic acid groups. These pendant carboxylic acid groups are believed to react with the basic amino groups of the amino silane to create a strong bond between the glass to which the silane is attached and the polyolefin compatible chemical coupler. An example of a suitable chemically coupled polyolefin for use with the fibers of this invention is commercially available as PCO-72 from Himont. PCO-72 is a mixture of unmodified polypropylene homopolymer and a small amount of modified polypropylene homopolymer.

The fibers of this invention may also be used to reinforce thermoplastics which are not chemically coupled. In this type of thermoplastic, the chemical coupler mentioned above is not added to the thermoplastic. An example of a suitable non-chemically coupled thermoplastic is commercially available as Profax® 6523 polypropylene from Himont and is a polypropylene homopolymer.

The sized fibers of this invention provide generally good results in both chemically coupled and non-chemically coupled thermoplastics.

The following is an example of one method of preparation of the sizing of this invention.

About 24 kilograms (Kg.)of polypropylene emulsion were added to about to 20 liters of deionized water at room temperature in a large tank with gentle stirring. It is important to avoid air entrainment and foam generation in the mixture. In a separate tank, about 3.1 Kgs. of gamma-aminopropyl- triethoxy silane were added to about 37 liters of deionized water having 1 Kg of acetic acid at room temperature. After gentle stirring for about 10 minutes, it was added to the prior mixture with moderate stirring. The aforementioned amount of the sodium hypophosphite is dissolved in water and added to the mix. In a separate tank about 150 grams of Dapral® partial ester were added to about 5 liters of deionized water at 25°C. After stirring for about 10 minutes, it was added to the prior mixture.

Glass fibers were sized with a roller applicator and chopped in a wet condition. The fibers were dried and compounded with a commercially available chemically coupled homopolymeric polypropylene (CCHP) using a counter-rotating extruder at a 30 weight percent glass content. The compounded glass and polypropylene mixture was molded in a 200 ton injection molding unit in a method known in the art and then tested for strength. The fibers were also compounded and molded with a commercially available non-chemically coupled homopolymeric polypropylene (HP) in the same manner.

The size formulations of Table 1 were prepared in a manner similar to that for the preferred embodiment which is further described at Example 2 in Table 1.

The sizings of Table 1 were each applied to a plurality of glass fibers to prepare a strand construction having 800 filaments per strand where the filaments had a fiber diameter of 13 microns. The strands for each example were wound into separate forming packages. A number of forming packages for each example, between 2 and 12, but preferably 4 were unwound and combined into a strand which passes over an applicator to apply additional moisture and/or sizing before chopping in a wet condition. Usually it is preferred to chop a multitude of strands, usually in the range of around 10 to 15 per chopper. The chopped strand can be either dried directly after chopping or collected and dried by a fluidized bed continuous process dryer.

In Table 1 the second batch of sizing formulations were prepared and along with these another Illustrative Example 1 (Illustrative Example 1B)and another Example 2 (Example 2B) were also prepared. These additional formulations are listed as Illustrative Example 1B, Example 2B, and Examples 3-6 in Table 1 and they all employ sodium hypophosphite as the stabilizer or antioxidant. The sizings were applied to glass fibers formed in strand constructions and chopped compounded, molded and tested in homopolymer polypropylene and chemically coupled polypropylene in a similar manner to that for Examples 1 and 2 for initial mechanical properties.

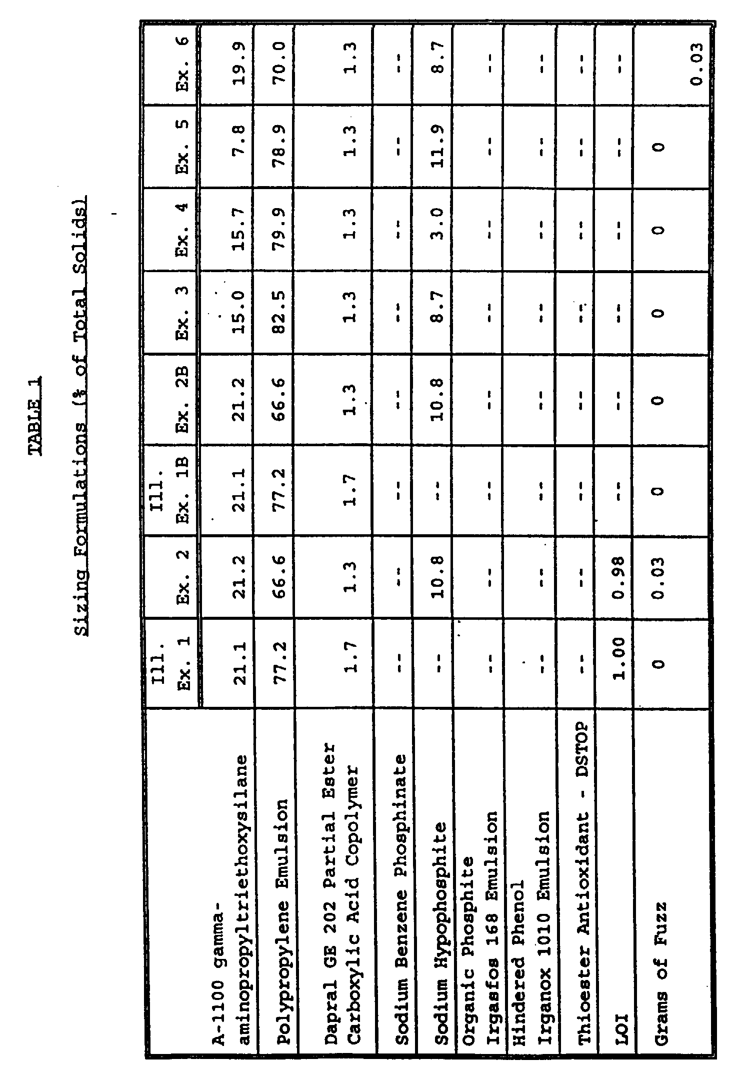

The chopped strands for each example were compounded, molded and tested separately in a similar manner in homopolymer polypropylene (12 Mf Himont F30S) and chemically coupled polypropylene (addition of 2.5 percent Exxelor POX1 1015 to the base polypropylene resin).

Compounding was performed to make fiber reinforced polypropylene plastic (FRP) samples by extruding the chopped glass fiber strands with pellets of the matrix polypropylene polymer in a Werner Pfleiderer ZSK 30 (millimeter) twin-screw extruder. The chopped strands were fed downstream using a vibratory glass strand feeder. The pellets of the matrix polymer and any additional polymer additives were dry blended prior to feeding into the extruder. The screw speed for the extruder was 300 rpm and the vacuum was full. Injection molding was performed with a Battenfeld CD750 machine and the screw speed was 100 rpm and the clamp pressure was 100 bar and the back pressure was 35 bar. The samples were molded using an ISO family mold.

The compounds for each example were tested for initial mechanical properties and color. They were also tested for retention of mechanical properties and color after heat-aging at 150°C for a total of 13 days. The initial mechanical property results are listed in Table 2 and the heat-aging mechanical property results for various times during the 13-day period are listed in Tables 3 and 4.

The tests were conducted in accordance with the following methods for the stated test: Tensile: on a Zwick 1476 machine according to ISO 527 with a 100 kiloNewton load at 2 millimeter (mm)/minute for measurement of modulus and 5 mm/minute for strength measurements for the crosshead speed, where the sample was held by mechanical wedge grips; Flexural: on A Zwick Model 1474 according to ISO 178 at 2 mm/minute for modulus and 5 mm/minute for strength with a 3 KiloNewton load with a three-point bending configuration and with a 64 mm span; Impact: with a Zwick impact tester (pendulum type) according to ISO standard 179 (Charpy) and ISO standard 180 (Izod); color: Dr. Lange Colorimeter; and glass content: by burning off broken test specimens.

The units in the following tables are SI units utilizing the following abbreviations: MPa = (megapascals); GPa = (gigapascals); J/m = (joules/meter); and kJ/meter2 = kilojoules/ square meter; (mm) = millimeters; (µm) = microns; (g/cm3) = grams per cubic centimeter; whiteness index is the opposite of the yellow index. The yellow and whiteness indices are related in that a low value for yellow or high value for whiteness are indicative of better performance.

In the first part of Table 2 the Illustrative Example 1 was conducted with examples 2. In the second part of Table 2, Table 2(B) the Illustrative Example 1B was conducted with examples 2b and 3-6. The formulation of Example 2 as shown in Table 2 resulted in increased mechanical properties in homopolymer relative to the illustrative example. Although the glass content was slightly higher, the tensile strength was 23 percent higher, the flexural strength was 20 percent higher, the unnotched charpy was 30 percent higher and the unnotched Izod was 59 percent higher. The color values indicated a whiter product (higher L value) and less yellow (lower b value). All of the Examples 1-6 gave comparable or higher initial mechanical properties. The results of the mechanical properties in Table 2 for Examples 2B and 3-6 and Illustrative Example 1B show a connection between the amount of sodium hypophosphite in the sizing formulation and the level of mechanical properties. Example 4 had the lowest amount of sodium hypophosphite and also had the lowest level of mechanical properties. Example 5 had the highest amount of sodium hypophosphite and had the highest level of mechanical properties. The mechanical properties for most of the size formulations of Examples 2-6 of Table 1 as shown in Table 2 resulted in equivalent mechanical properties to those obtained for the Illustrative Example 1 formulation.

As shown in Table 3, the specimens were taken from heat-aging at 150°C at the first, third, sixth, ninth and thirteenth days and tested for tensile and impact properties. Examples 2 and 8 had significantly better heat aging results than the illustrative example without the antioxidant. The product from Example 9 had good results up until the 13th day and then failed to the extent that it was not measurable due to oxidation. The heat-aging properties for the product of Example 9 are in the most part similar to those for Example 8 until the 13th day. Given the similarities in the formulation and the data through nine days, the 13th day value may be suspect. The impact properties (unnotched charpy and unnotched Izod) in homopolymer polypropylene are listed in Table 3. All the examples with antioxidant or stabilizer have superior properties to those of Illustrative Example 1. In unnotched Izod, both the product of Example 8 and Example 2 stood out as being significantly better. The property retention in unnotched charpy and unnotched Izod were slightly different. The unnotched charpy impact test demonstrated with Example 2 significantly better property retention after 13 days than that for Illustrative Example 1. The unnotched Izod was more differentiating, and Example 2 was significantly better than those for Illustrative Example 1 and the other size formulations.

The properties of tensile strength and elongation for chemically coupled polypropylene after heat-aging are listed in Table 4. In chemically coupled polypropylene, example 2, was significantly better than the results for Illustrative Example 1. Impact retention of the chemically coupled polypropylene with heat-aging is also shown in Table 4. Similar results are observed where the result for Example 2, provides the best result on heat aging.

From the data in Tables 1-4, the size and sized glass fibers and polypropylene reinforcement articles of the present invention provides significant improvement in heat aging for the reinforced polypropylene and significant improvements in homopolymer mechanical properties of the polypropylene and significant improvement in color of both the homopolymer and chemically coupled polypropylene in terms of higher L values (more white) and lower b values (less yellow).

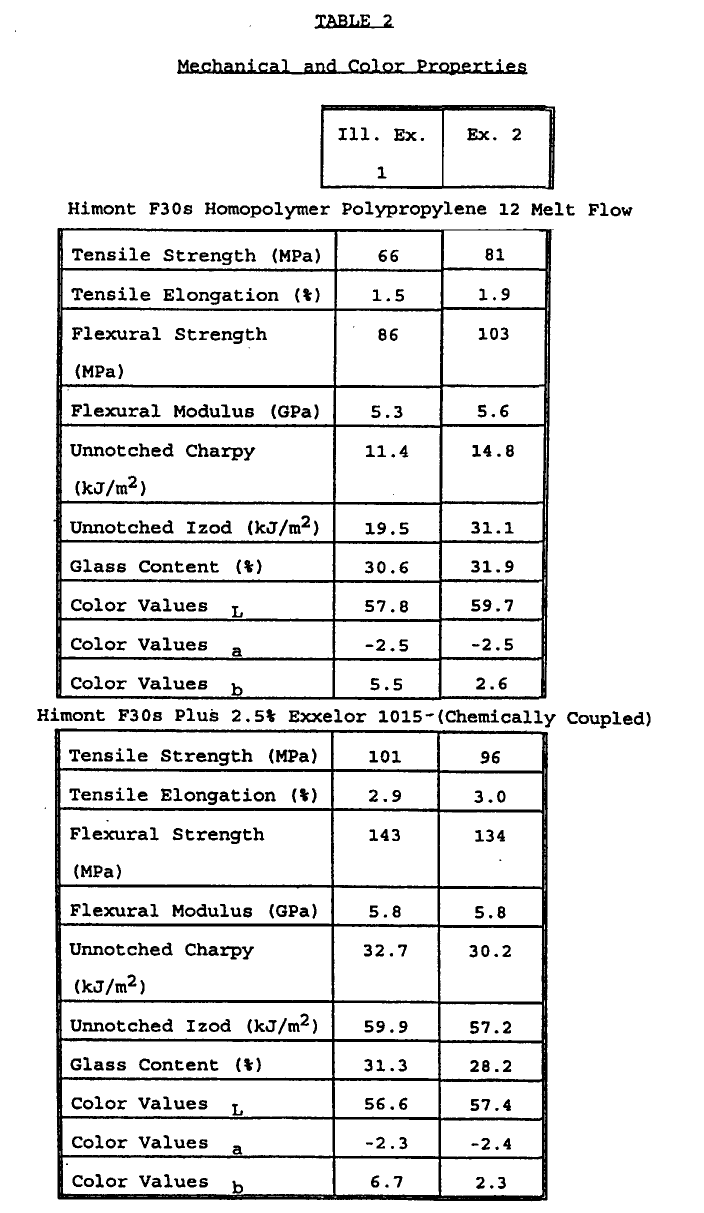

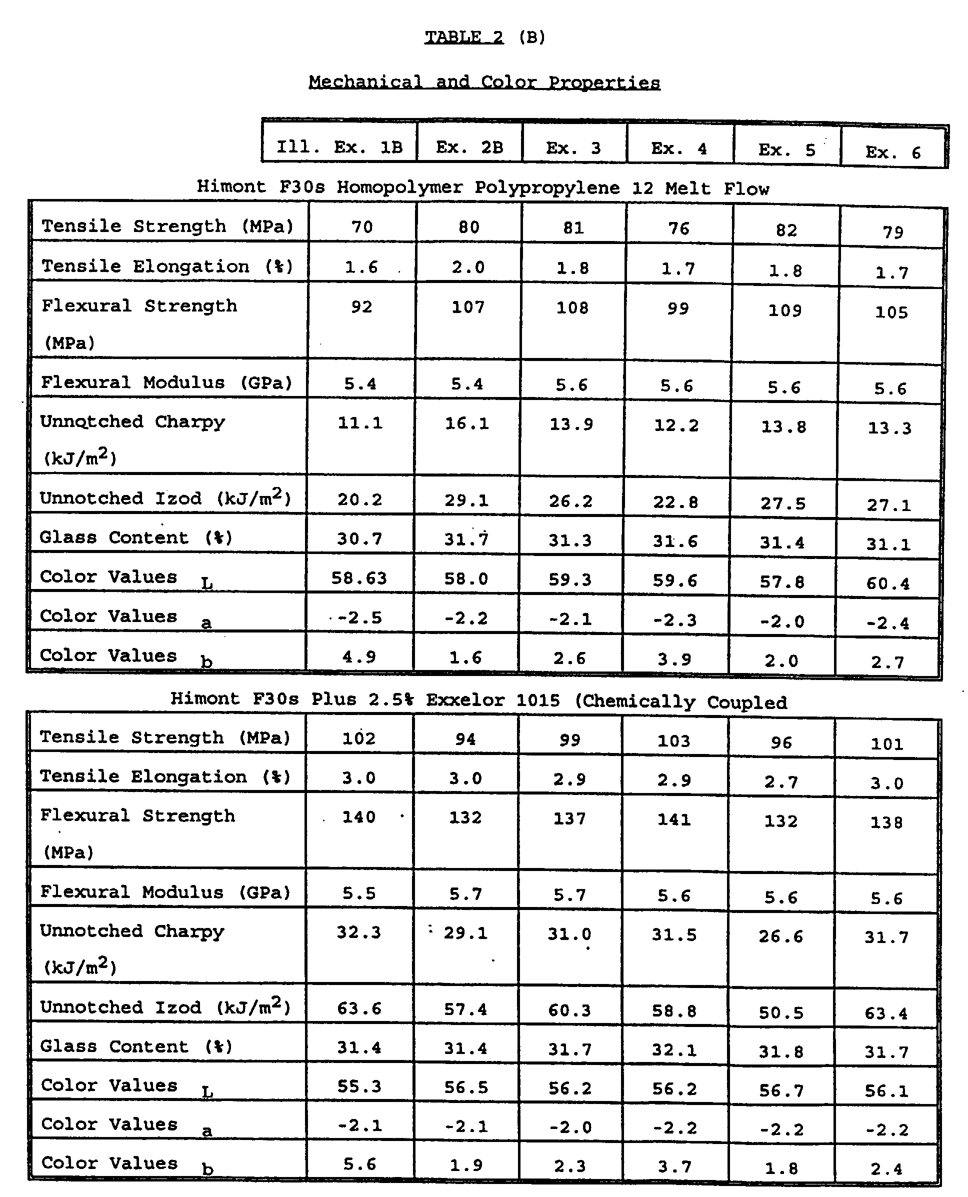

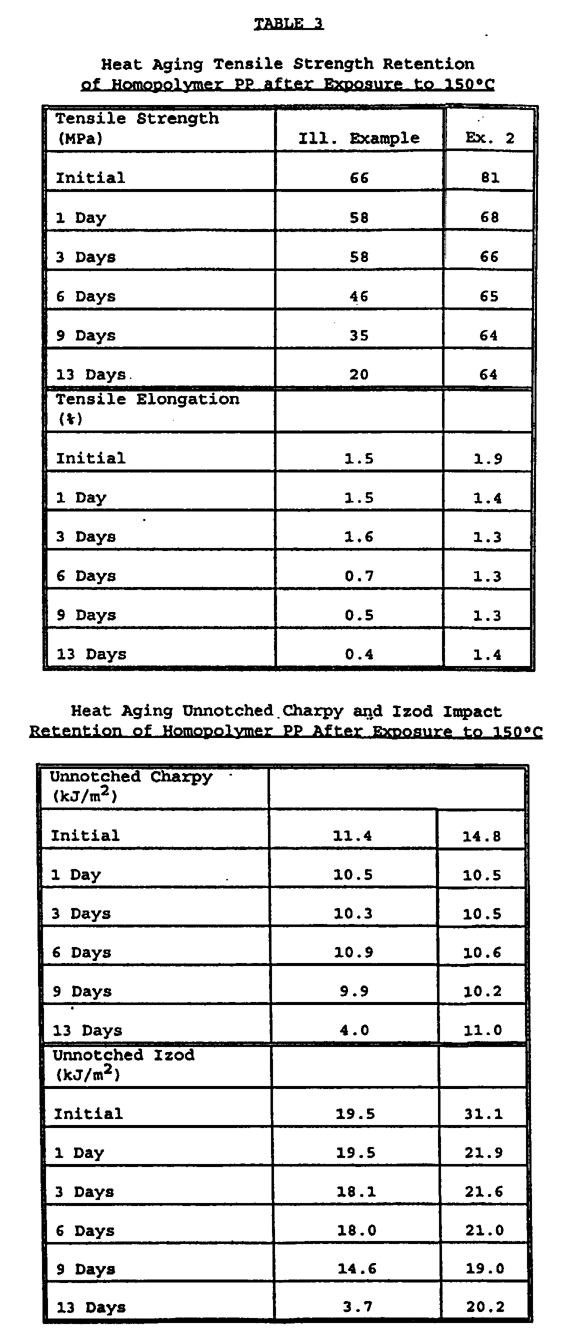

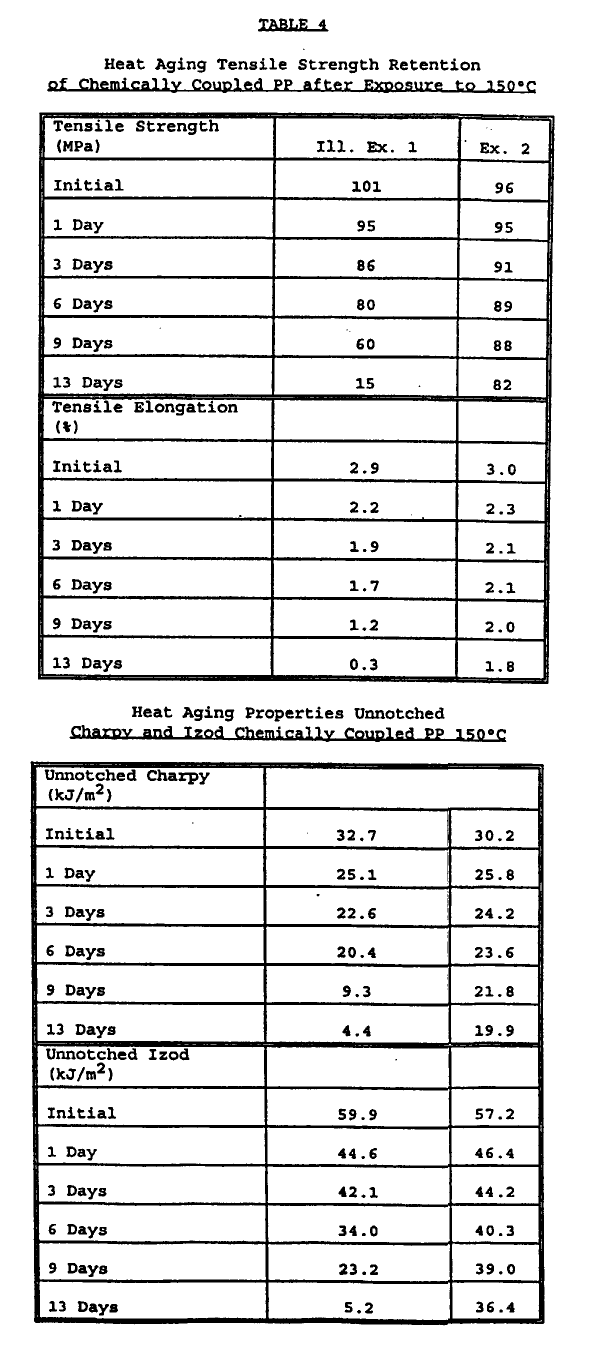

## Claims

1. An aqueous sizing composition for glass fibers, comprising:
a) an organo functional inorganic coupling agent,
b) an acid modified polyolefin film forming material;
c) a stabilizer selected from the group consisting of:
i) hypophosphites selected from the group consisting of alkali metal hypophosphites, alkaline earth metal hypophosphites, ammonium hypophosphites and mixtures thereof; and
ii) mixtures of one or more of the stabilizers of i) with an antioxidant selected from the group consisting of hindered phenols, diarylamines, thioethers and mixtures thereof.

2. The aqueous sizing conposition of claim 1, wherein the acid modified polyolefin film forming material is a carboxylic acid modified polyolefin.

3. The aqueous sizing composition of claim 2 wherein the carboxylic acid modified polyolefin is in the form of an aqueous emulsion.

4. The aqueous sizing composition of claim 2 wherein the polyolefin is polypropylene.

5. The aqueous sizing composition of claim 4 wherein the carboxylic acid modified polypropylene is selected from the group consisting of crystalline, carboxylic acid modified polypropylene and amorphous, carboxylic acid modified polypropylene.

6. The aqueous sizing composition of claim 3 wherein the emulsion is an oil-in-water emulsion and the sizing composition contains from 50 weight percent to 90 weight percent of the carboxylic acid modified polyolefin, the percentages based on total solids of the sizing composition.

7. The aqueous sizing composition of claim 1 comprising 1-25 weight percent of one or more stabilizers for the oxidizing phenomena based on the total amount of the non aqueous components in the sizing composition.

8. The aqueous sizing composition of claim 1 wherein the hypophosphite is selected from the group consisting of alkali metal hypophosphites and ammonium hypophosphite.

9. The aqueous sizing composition of claim 8 wherein the stabilizer is an alkali metal hypophosphite selected from the group consisting of sodium hypophosphite and potassium hypophosphite.

10. The aqueous sizing composition of claim 9 wherein the stabilizer is sodium hypophosphite.

11. The aqueous sizing composition of claim 1 wherein the coupling agent is an organofunctional silane coupling agent which is an aminofunctional organosilane selected from the group consisting of gamma-aminopropyltriethoxy silane, gamma-aminopropyltrimethoxy silane and hydrolysis products thereof.

12. The aqueos sizing composition of claim 1 further comprising a partial ester of a branched carboxylic acid copolymer.

13. The aqueous sizing composition of claim 11 further comprising a carboxylic acid in an amount sufficient to hydrolyze the silane coupling agent.

14. The aqueous sizing composition of claim 1 further comprising a water miscible or soluble organic solvent.

15. An aqueous sizing composition for glass fibers, comprising:
a) an aminofunctional organosilane coupling agent or hydrolysis products thereof in an amount ranging from 1 weight percent to 30 weight percent;
b) an aqueous emulsion of a carboxylic acid modified polypropylene film forming material in an amount ranging from 50 weight percent to 90 weight percent; and
c) a stabilizer in an amount ranging from 1 weight percent to 25 weight percent selected from the group consisting of:
i) hypophosphites selected from the group consisting of alkali metal hypophosphites, alkaline earth metal hypophosphites, ammonium hypophosphite and mixtures thereof; and
ii) mixture of one or more of the stabilizers of i) with an antioxidant selected from the group consisting of hindered phenols, diarylamines, thioethers and mixtures thereof, the percentages based on the weight of total solids of the aqueous sizing composition.

16. The aqueous sizing composition of claim 15 wherein the stabilizer is sodium hypophosphite in an amount ranging from 3 weight percent to 15 weight percent.

17. The aqueous sizing composition of claim 15 wherein the amount of coupling agent ranges from 7,5 weight percent to 23,5 weight percent.

18. The aqueous sizing composition of claim 15 wherein the amount of film forming material ranges from 64 weight percent to 84 weight percent.

19. The aqueous sizing composition of claim 15 further comprising a partial -ester of a branched carboxylic acid copolymer in an amount ranging from 0,3 weight percent to 2,3 weight percent.

20. A plurality of glass fibers having applied thereon a moisture reduced residue of the aqueous sizing composition of any of claims 1-19 in an amount ranging from 0,3 weight percent to 3 weight percent, the percentages based on the weight of the glass, on a loss on ignition basis.

21. A glass fiber reinforced polyolefin composite wherein the glass fiber reinforcement is a plurality of glass fibers according to claim 20.

22. The glass fiber reinforced polyolefin composite of claim 21 wherein the plurality of glass fibers are chopped fibers and the polyolefin is polypropylene.

23. The glass fiber reinforced composite of claim 22 wherein the polyolefin is a chemically coupled polypropylene.

## Patentansprüche

1. Wäßrige Schlichtenzusammensetzung für Glasfasern enthaltend:
a) einen organofunktionellen anorganischen Haftvermittler,
b) einen säuremodifizierten Polyolefinfilmbildner,
c) einen Stabilisator ausgewählt aus der Gruppe bestehend aus:
i) Hypophosphiten ausgewählt aus der Gruppe bestehend aus Alkalimetallhypophosphiten, Erdalkalimetallhypophosphiten, Ammoniumhypophosphiten und Mischungen davon, und
ii) Mischungen eines oder mehrerer der unter i) genannten Stabilisatoren mit einem Antioxidans ausgewählt aus der Gruppe bestehend aus gehinderten Phenolen, Diarylaminen, Thioethern und Mischungen davon.

2. Wäßrige Schlichtenzusammensetzung nach Anspruch 1, wobei der säuremodifizierte Polyolefinfilmbildner ein carbonsäuremodifiziertes Polyolefin ist.

3. Wäßrige Schlichtenzusammensetzung nach Anspruch 2, wobei das carbonsäuremodifizierte Polyolefin in Form einer wäßrigen Emulsion vorliegt.

4. Wäßrige Schlichtenzusammensetzung nach Anspruch 2, wobei das Polyolefin Polypropylen ist.

5. Wäßrige Schlichtenzusammensetzung nach Anspruch 4, wobei das carbonsäuremodifizierte Polypropylen ausgewählt ist aus der Gruppe bestehend aus kristallinem carbonsäuremodifiziertem Polypropylen und amorphem carbonsäuremodifiziertem Polypropylen.

6. Wäßrige Schlichtenzusammensetzung nach Anspruch 3, wobei die Emulsion eine Öl-in-Wasser-Emulsion ist und die Schlichtenzusammensetzung 50 bis 90 Gew.-% des carbonsäuremodifizierten Polyolefins enthält, wobei die Prozentangaben sich auf den Gesamtfeststoffgehalt der Schlichtenzusammensetzung beziehen.

7. Wäßrige Schlichtenzusammensetzung nach Anspruch 1, die 1 bis 25 Gew.-% eines oder mehrere Stabilisatoren gegen Oxidationseffekte, bezogen auf die Gesamtmenge der nichtwäßrigen Bestandteile der Schlichtenzusammensetzung, enthält.

8. Wäßrige Schlichtenzusammensetzung nach Anspruch 1, wobei das Hypophosphit aus der Gruppe bestehend aus Alkalimetallhypophosphiten und Ammoniumhypophosphiten ausgewählt ist.

9. Wäßrige Schlichtenzusammensetzung nach Anspruch 8, wobei der Stabilisator ein Alkalimetallhypophosphit, ausgewählt aus der Gruppe bestehend aus Natriumhypophosphit und Kaliumhypohosphit, ist.

10. Wäßrige Schlichtenzusammensetzung nach Anspruch 9, wobei der Stabilisator Natriumhypophosphit ist.

11. Wäßrige Schlichtenzusammensetzung nach Anspruch 1, wobei der Haftvermittler ein organofunktioneller Silanhaftvermittler ist, der ein aminofunktionelles Organosilan ist, das aus der Gruppe bestehend aus γ-Aminopropyltriethoxysilan, γ-Aminopropyltrimetoxysilan und Hydrolyseprodukten davon ausgewählt ist.

12. Wäßrige Schlichtenzusammensetzung nach Anspruch 1, die zusätzlich ein Teilester eines verzweigten Carbonsäurecopolymers enthält.

13. Wäßrige Schlichtenzusammensetzung nach Anspruch 11, die zusätzlich eine Carbonsäure in einer Menge enthält, die ausreichend ist, um den Silanhaftvermittler zu hydrolysieren.

14. Wäßrige Schlichtenzusammensetzung nach Anspruch 1, die zusätzlich ein wassermischbares oder -lösliches organisches Lösungsmittel enthält.

15. Wäßrige Schlichtenzusammensetzung für Glasfasern enthaltend:
a) einen aminonofunktionellen Organosilanhaftvermittler oder Hydrolyseprodukte davon in einer Menge im Bereich von 1 bis 30 Gew.-%,
b) eine wäßrige Emulsion eines carbonsäuremodifizierten Polypropylenfilmbildners in einer Menge im Bereich von 50 bis 90 Gew.-% und
c) einen Stabilisator in einer Menge im Bereich von 1 bis 25 Gew.-% ausgewählt aus der Gruppe bestehend aus:
i) Hypophosphiten ausgewählt aus der Gruppe bestehend aus Alkalimetallhypophosphiten, Erdalkalimetallhypophosphiten, Ammoniumhypophosphiten und Mischungen davon, und
ii) Mischungen eines oder mehrerer der unter i) genannten Stabilisatoren mit einem Antioxidans ausgewählt aus der Gruppe bestehend aus gehinderten Phenolen, Diarylaminen, Thioethern und Mischungen davon, wobei sich die Prozentangaben auf den Gesamtfeststoffgehalt der wäßrigen Schlichtenzusammensetzung beziehen.

16. Wäßrige Schlichtenzusammensetzung nach Anspruch 15, wobei der Stabilisator Natriumhypophosphit in einer Menge im Bereich von 3 bis 15 Gew.-% ist.

17. Wäßrige Schlichtenzusammensetzung nach Anspruch 15, wobei die Menge des Haftvermittlers im Bereich von 7,5 bis 23,5 Gew.-% liegt.

18. Wäßrige Schlichtenzusammensetzung nach Anspruch 15, wobei die Menge an Filmbildner im Bereich von 64 bis 84 Gew.-% liegt.

19. Wäßrige Schlichtenzusammensetzung nach Anspruch 15, die zusätzlich ein Teilester eines verzweigten Carbonsäurecopolymers in einer Menge im Bereich von 0,3 bis 2,3 Gew.-% enthält.

20. Vielzahl an Glasfasern, auf denen ein Rest der wäßrigen Schlichtenzusammensetzung nach einem der Ansprüche 1 bis 19, bei dem die Feuchtigkeit entfernt ist, in einer Menge im Bereich von 0,3 bis 3 Gew.-% aufgebracht ist, wobei die Prozentangaben auf das Gewicht des Glases auf einer Verlust-nach-Verbrennungs-Basis bezogen sind.

21. Glasfaserverstärktes Polyolefinkomposit, wobei die Glasfaserverstärkung eine Vielzahl von Glasfasern nach Anspruch 20 ist.

22. Glasfaserverstärktes Polyolefinkomposit nach Anspruch 21, wobei die Vielzahl von Glasfasern geschnittene Fasern sind und das Polyolefin Polypropylen ist.

23. Glasfaserverstärktes Komposit nach Anspruch 22, wobei das Polyolefin ein chemisch gekoppeltes Polypropylen ist.

## Revendications

1. Composition d'ensimage aqueuse pour des fibres de verre, qui comprend :
a) un agent de couplage inorganique organofonctionnel,
b) une matière filmogène à base de polyoléfine modifiée à l'acide,
c) un stabilisateur choisi dans le groupe constitué par:
i) des hypophosphites choisis dans le groupe constitué par des hypophosphites de métaux alcalins, des hypophosphites de métaux alcalino-terreux, des hypophosphites d'ammonium et leurs mélanges, et
ii) des mélanges d'un ou plusieurs stabilisateurs énumérés en i) et d'un antioxydant choisi dans le groupe constitué par des phénols empêchés, des diarylamines, des thioesters et leurs mélanges.

2. Composition d'ensimage aqueuse suivant la revendication 1, caractérisée en ce que la matière filmogène en polyoléfine modifiée à l'acide est une polyoléfine modifiée par un acide carboxylique.

3. Composition d'ensimage aqueuse suivant la revendication 2, caractérisée en ce que la polyoléfine modifiée par un acide carboxylique se présente sous la forme d'une émulsion aqueuse.

4. Composition d'ensimage aqueuse suivant la revendication 2, caractérisée en ce que la polyoléfine est le polypropylène.

5. Composition d'ensimage aqueuse suivant la revendication 4, caractérisée en ce que le polypropylène modifié par un acide carboxylique est choisi dans le groupe formé par le polypropylène modifié par un acide carboxylique, cristallin et le polypropylène modifié par un acide carboxylique, amorphe.

6. Composition d'ensimage aqueuse suivant la revendication 3, caractérisée en ce que l'émulsion est une émulsion huile-dans-eau et la composition d'ensimage contient de 50% en poids à 90% en poids de la polyoléfine modifiée par un acide carboxylique, les pourcentages étant basés sur les solides totaux de la composition d'ensimage.

7. Composition d'ensimage aqueuse suivant la revendication 1, caractérisée en ce qu'elle comprend de 1 à 25% en poids d'un ou plusieurs stabilisateurs pour les phénomènes d'oxydation, sur base de la quantité totale des composants non aqueux présents dans la composition d'ensimage.

8. Composition d'ensimage aqueuse suivant la revendication 1, caractérisée en ce que l'on choisit l'hypophosphite dans le groupe constitué par les hypophosphites de métaux alcalins et l'hypophosphite d'ammonium.

9. Composition d'ensimage aqueuse suivant la revendication 8, caractérisée en ce que le stabilisateur est un hypophosphite de métal alcalin choisi dans le groupe constitué par l'hypophosphite de sodium et l'hypophosphite de potassium.

10. Composition d'ensimage aqueuse suivant la revendication 9, caractérisée en ce que le stabilisateur est l'hypophosphite de sodium.

11. Composition d'ensimage aqueuse suivant la revendication 1, caractérisée en ce que l'agent de couplage est un agent de couplage du type silane organofonctionnel, qui est organosilane aminofonctionnel choisi dans le groupe constitué par le gamma-aminopropyltriéthoxysilane, le gamma-aminopropyltriméthoxysilane et leurs produits d'hydrolyse.

12. Composition d'ensimage aqueuse suivant la revendication 1, caractérisée en ce qu'elle comprend, en outre, un ester partiel d'un copolymère d'acide carboxylique ramifié.

13. Composition d'ensimage aqueuse suivant la revendication 11, caractérisée en ce qu'elle comprend, en outre, un acide carboxylique en une proportion qui suffit à hydrolyser l'agent de couplage du type silane.

14. Composition d'ensimage aqueuse suivant la revendication 1, caractérisée en ce qu'elle comprend, en outre, un solvant organique miscible à l'eau ou soluble dans l'eau.

15. Composition d'ensimage aqueuse pour fibres de verre, qui comprend :
a) un agent de couplage du type organosilane aminofonctionnel ou des produits d'hydrolyse de celui-ci en une quantité qui varie de 1% en poids à 30% en poids;
b) une émulsion aqueuse d'une matière filmogène en polypropylène modifié à l'acide carboxylique en une proportion qui varie de 50% en poids à 90% en poids, et
c) un stabilisateur en une proportion qui varie de 1% en poids à 25% en poids, choisi dans le groupe constitué par:
i) des hypophosphites choisis dans le groupe constitué par des hypophosphites de métaux alcalins, des hypophosphites de métaux alcalino-terreux, l'hypophosphite d'ammonium et leurs mélanges, et
ii) un mélange d'un ou plusieurs stabilisateurs de i) et d'un antioxydant choisi dans le groupe constitué par les phénols empêchés, les diarylamines, les thioesters et leurs mélanges, les pourcentages étant basés sur le poids des solides totaux de la composition d'ensimage aqueuse.

16. Composition d'ensimage aqueuse suivant la revendication 15, caractérisée en ce que le stabilisateur est l'hypophosphite de sodium en une proportion qui varie de 3% en poids à 15% en poids.

17. Composition d'ensimage aqueuse suivant la revendication 15, caractérisée en ce que la proportion de l'agent de couplage varie de 7,5% en poids à 23,5% en poids.

18. Composition d'ensimage aqueuse suivant la revendication 15, caractérisée en ce que la quantité de la matière filmogène varie de 64% en poids à 84% en poids.

19. Composition d'ensimage aqueuse suivant la revendication 15, caractérisée en ce qu'elle comprend, en outre un ester partiel d'un copolymère d'acide carboxylique ramifié en une proportion qui varie de 0,3% en poids à 2,3% en poids.

20. Une multiplicité de fibres de verre sur lesquelles on a appliqué un résidu à humidité réduite de la composition d'ensimage aqueuse suivant l'une quelconque des revendications 1 à 19 en une proportion qui varie de 0,3% en poids à 3% en poids, les pourcentages étant basés sur le poids du verre, sur base de la perte au feu.

21. Produit composite en polyoléfine renforcée de fibres de verre, caractérisé en ce que le renforcement par des fibres de verre est constitué par une multiplicité des fibres de verre suivant la revendication 20.

22. Produit composite en polyoléfine renforcée de fibres de verre suivant la revendication 21, caractérisé en ce que la multiplicité de fibres de verre sont des fibres hachées et en ce que la polyoléfine est le polypropylène.

23. Produit composite renforcé de fibres de verre suivant la revendication 22, caractérisé en ce que la polyoléfine est un polypropylène chimiquement couplé.
